# EUROPEAN PATENT APPLICATION

(11) **EP 4 607 810 A1**
(43) Date of publication of application: **27.08.2025**
(21) Application number: 24159543.8
(22) Date of filing: 26.02.2024
(51) Int. Cl.: H04B 5/26, H04B 5/72, H05B 47/19, G06K 19/077

(54) **SYSTEMS COMPRISING A COMMUNICATION MODULE WITH A NFC ANTENNA AND AN ANTENNA ARRANGEMENT WITH AN ANTENNA**

(71) Applicant: Tridonic GmbH & Co. KG, 6851 Dornbirn (AT)
(72) Inventor: Romano, Fabio, 6851 Dornbirn (AT); Saccavini, Lukas, 6851 Dornbirn (AT); Lochmann, Frank, 6851 Dornbirn (AT)
(74) Representative: Beder, Jens

(57) **Abstract**

The present invention provides a system (10) comprising a communication module (20) with a NFC antenna (21) that is part of or electrically connected with the communication module (20), and an antenna arrangement (30) with an antenna (31). An element (32) of the antenna arrangement (30) is configured for being attached by at least one of friction fit, form fit and a magnet to the communication module (20) or a substrate (22), on which the NFC antenna (21) is arranged, such that the antenna (31) of the antenna arrangement (30) is coupled with the NFC antenna (21). The communication module (20) is configured to wirelessly communicate via the NFC antenna (21) and antenna (31) of the antenna arrangement (30) when the element (32) is attached to the communication module (20) or the substrate (22) such that the antenna (31) of the antenna arrangement (30) is coupled with the NFC antenna.

## Description

The present invention relates to a system comprising a communication module with a nearfield communication (NFC) antenna that is part of the communication module or electrically connected with the communication module, and an antenna arrangement with an antenna. The invention relates to a system comprising a communication module arranged on a printed circuit board, PCB, an NFC antenna electrically connected with the communication module via a feeding line, and an antenna arrangement with an antenna. The invention relates to a luminaire comprising any one of the aforementioned systems.

Lighting means drivers for driving lighting means, such as light emitting diode (LED) drivers for driving one or more LEDs, may comprise a NFC communication interface. For this, the lighting means driver may comprise a NFC antenna via which a NFC communication may be performed. A lighting means driver, (in short driver) for driving one or more LEDs may be referred to as "LED driver".

When such a driver with an NFC antenna is arranged in the housing of a luminaire for driving the lighting means, i.e. the light source, of the luminaire arranged in the housing, then the driver is not necessarily positioned in the housing such that the NFC antenna of the driver is arranged near an inner surface of the housing. As a result, a wireless communication of the driver via the NFC antenna with an element arranged outside the housing may be difficult or impossible. For example, in case the driver is arranged in the housing such that the NFC antenna is positioned by a distance away from the inner surface of the housing that is greater than a distance allowing NFC communication, a wireless communication using the NFC antenna with an element arranged outside the housing is not possible.

Therefore, it is an object of the present invention to allow providing a lighting means driver with a NFC communication function in a housing of a luminaire, wherein the NFC communication is possible irrespective of the position at which the lighting means driver is arranged in the housing.

These and other objects, which become apparent upon reading the following description, are solved by the subject matter of the independent claim. The dependent claims refer to preferred embodiments of the invention.

According to a first aspect of the invention a system is provided. The system comprises a communication module with a nearfield communication (NFC) antenna that is part of the communication module or electrically connected with the communication module. The system comprises an antenna arrangement with an antenna. An element of the antenna arrangement is configured for being attached by at least one of friction fit, form fit and a magnet to the communication module or a substrate, on which the NFC antenna is arranged, such that the antenna of the antenna arrangement is coupled with the NFC antenna. Optionally, the element of the antenna arrangement is configured for being detachably attached by at least one of friction fit, form fit and a magnet to the communication module or the substrate, on which the NFC antenna is arranged, such that the antenna of the antenna arrangement is coupled with the NFC antenna. The communication module is configured to wirelessly communicate via the NFC antenna and the antenna of the antenna arrangement when the element of the antenna arrangement is attached to the communication module or the substrate, on which the NFC antenna is arranged, such that the antenna of the antenna arrangement is coupled with the NFC antenna.

In other words, the element of the antenna arrangement is configured for being positioned and attached, optionally detachably attached, by at least one of friction fit, form fit and a magnet relative to the NFC antenna to the communication module or a substrate, on which the NFC antenna is arranged, such that the antenna of the antenna arrangement is coupled with the NFC antenna. The term "removable" may be used as a synonym for the term "detachable".

The system of the first aspect allows providing a lighting means driver, such as a LED driver, with a NFC communication function in a housing of a luminaire, wherein the NFC communication is possible irrespective of the position at which the lighting means driver is arranged in the housing. Namely, the communication module with the NFC antenna may be integrated in or electrically connected with the driver in order to provide a NFC communication interface to the driver. This allows the driver to wirelessly communicate using NFC communication. Since the system comprise an antenna arrangement with an antenna, the antenna of the antenna arrangement may be positioned near the inner surface of the housing of the luminaire. The element of the antenna arrangement allows such positioning of the antenna near the inner surface of the housing of the luminaire irrespective of the position at which the driver and, thus, the NFC antenna are positioned in the housing. Namely, the element of the antenna arrangement may be attached by at least one of friction fit, form fit and a magnet to the communication module or a substrate, on which the NFC antenna is arranged, such that the antenna of the antenna arrangement is coupled with the NFC antenna. This allows the communication module to wirelessly communicate via the NFC antenna and the antenna of the antenna arrangement with an element outside of the housing.

The system of the first aspect has the advantage that the element of the antenna arrangement is attached by at least one of friction fit, form fit and a magnet to the communication module or a substrate, on which the NFC antenna is arranged. Compared to an attachment using an adhesive tape the aforementioned types of attaching the element of the antenna arrangement is durable. Inside a luminaire's housing heat may be generated by the luminaire's light emission, e.g. by the lighting means driver, light source and/or communication module, which may cause an attachment using adhesive tape to be damaged or resolved. An attachment by at least one of friction fit, form fit and a magnet is not disturbed or resolved by heat generated in a luminaire's housing. Moreover, the adhesive tape is not suitable to be attached to small NFC antennas. Furthermore, when using strong adhesive tapes that may resist heat generate in the luminaire's housing, the attachment of the element of the antenna arrangement to the communication module or the substrate, on which the NFC antenna is arranged, may not be detachable. In contrast, an attachment by at least one of friction fit, form fit and a magnet may be implemented as a detachable attachment.

Moreover, the system allows improving the NFC communication from the communication module via the NFC antenna to outside a luminaire's housing, when the communication module is arrange inside the housing, without the need of opening the closed luminaire's housing again at the end of manufacturing the luminaire, which comprises the housing and the communication module with the NFC antenna being arranged inside the housing. This is advantageous, because an opening of the luminaire's housing after the manufacturing may lead to loss of warranty claims on the luminaire.

The communication module with the NFC antenna may be configured to be integrated in a driver for driving lighting means. The communication module with the NFC antenna may be configured to be electrically connected with the driver for driving lighting means. The driver for driving lighting means may be a LED driver for driving one or more LEDs. The communication module may be a separate module, e.g. with regard to a lighting means driver. For example, the communication module may be a DALI gateway or any other communication protocol gateway.

DALI is a known standard in the field of lighting ("digital addressable lighting interface"). The abbreviation DALI may refer to the DALI standard (also referred to as DALI-1 or DALI version 1) and the DALI-2 standard (also referred to as DALI or DALI version 2). DALI-2 is the follow up standard of DALI. The communication module with the NFC antenna integrated in a driver or electrically connected with the driver allows providing to and/or receiving from the communication module information (i.e. data) using NFC communication. For example, the driver may be parametrized via NFC and/or data, such as diagnostic data, may be received (e.g. read) from the driver via NFC.

The antenna arrangement, e.g. the element of the antenna arrangement, may be configured to be coupled with the NFC antenna using a wired connection. Alternatively, the antenna arrangement, e.g. the element of the antenna arrangement, may be configured to be wirelessly coupled with the NFC antenna. That is, the antenna of the antenna arrangement may receive data from the NFC antenna via a wired electrical connection between the antenna arrangement, e.g. the element, and the communication module or the NFC antenna. Alternatively, the antenna of the antenna arrangement may receive data from the NFC antenna wirelessly, e.g. via electromagnetic coupling.

Optionally, the element of the antenna arrangement is a feeding line electrically connected at a first end of its two ends with the antenna of the antenna arrangement. A second end of the two ends of the feeding line may be configured to be attached by at least one of friction fit, form fit and a magnet to an electrical connector of the communication module or of the substrate for being electrically connected with the electrical connector. The electrical connector may be configured such that the antenna is electrically connected in parallel with the NFC antenna when the second end of the two ends of the feeding line is electrically connected with the electrical connector.

In other words, the antenna may be electrically connected in parallel with the NFC antenna using a wired connection in the form of the feeding line of the antenna arrangement.

Herein, a feeding line may comprise or be one or more wires, e.g. in the form of one or more cables. For example, multiple wires may be in the form of one or more cables.

The antenna arrangement may comprise a balancing circuit that is electrically connected, e.g. in parallel, with the antenna of the antenna arrangement for balancing the antenna of the antenna arrangement and the NFC antenna when the antenna is electrically connected in parallel with the NFC antenna. For example, the balancing circuit may comprise a capacitor that is electrically connected in parallel with the antenna. The balancing circuit may be differently implemented, e.g. alternatively or additionally comprising a different electrical component compared to the capacitor. The balancing may be done according to any means known in the art.

The NFC antenna may be one or more electromagnetic coils. The NFC antenna may be a printed antenna, such as microstrip antenna or antenna patch. For example, the NFC antenna may be printed on a printed circuit board (PCB) being the substrate, on which the NFC antenna may be arranged. Herein, an antenna, such as the NFC antenna, being printed on a PCB may be referred to as PCB antenna. The NFC antenna is not limited to a specific antenna type.

The antenna of the antenna arrangement may be one or more electromagnetic coils. The antenna of the antenna arrangement may be a printed antenna, such as microstrip antenna or antenna patch. For example, the antenna of the antenna arrangement may be printed on a printed circuit board (PCB). The antenna of the antenna arrangement is not limited to a specific antenna type. The antenna of the antenna arrangement may be a NFC antenna.

The electrical connector may comprise a connection terminal and the second end of the feeding line may be configured to be electrically connected with the electrical connector by being attached to the connection terminal by at least one of friction fit, form fit and a magnet.

Optionally, the electrical connector is a female connector and the second end comprises a male connector. Alternatively, the electrical connector is a male connector and the second end comprises a female connector.

Optionally, the NFC antenna is arranged on the substrate, and the element of the antenna arrangement is an auxiliary antenna that is electrically connected with the antenna of the antenna arrangement via a feeding line. The auxiliary antenna may be configured to be attached by at least one of friction fit, form fit and a magnet to the substrate, on which the NFC antenna is arranged, such that electromagnetic waves radiated by the NFC antenna are received by the auxiliary antenna.

In other words, the auxiliary antenna may be configured to be positioned and attached by at least one of friction fit, form fit and a magnet relative to the NFC antenna to the substrate, on which the NFC antenna is arranged, such that electromagnetic waves radiated by the NFC antenna are received by the auxiliary antenna. The auxiliary antenna of the antenna arrangement may be one or more electromagnetic coils. The auxiliary antenna of the antenna arrangement may be a printed antenna, such as microstrip antenna or antenna patch. For example, the auxiliary antenna of the antenna arrangement may be printed on a printed circuit board (PCB). The auxiliary antenna of the antenna arrangement is not limited to a specific antenna type. The auxiliary antenna may be a NFC antenna.

For example, the auxiliary antenna may be configured to be attached by at least one of friction fit, form fit and a magnet to the substrate, on which the NFC antenna is arranged, such that the auxiliary antenna and the NFC antenna are aligned in a main direction of radiation of the NFC antenna.

That is, optionally the antenna arrangement, e.g. the auxiliary antenna, may be wirelessly connected with the NFC antenna. This allows easily retrofitting or upgrading communication modules with a NFC antenna. Moreover, the communication module or the substrate, on which the NFC antenna is arranged, is not to be adapted (e.g. no electrical connector at the communication module or the substrate is provided). Furthermore, in case of a wireless coupling of the antenna arrangement, e.g. the auxiliary antenna, with the NFC antenna, no balancing circuit is provided, because neither the auxiliary antenna nor the antenna of the antenna arrangement are electrically connected in parallel with the NFC antenna in the aforementioned case.

The substrate, on which the NFC antenna is arranged, may be a PCB.

Optionally, the auxiliary antenna is integrated in a casing made of a material that allows electromagnetic waves to pass through, and the casing is configured to be attached by at least one of friction fit, form fit and a magnet to the substrate, on which the NFC antenna is arranged, by at least partly accommodating the substrate, on which the NFC antenna is arranged.

In other words, the casing may be configured to be attached by at least one of friction fit, form fit and a magnet relative to the NFC antenna to the substrate, on which the NFC antenna is arranged, by at least partly accommodating the substrate, on which the NFC antenna is arranged. The casing may be configured to be attached by at least one of friction fit, form fit and a magnet to the substrate, on which the NFC antenna is arranged, by at least partly accommodating the substrate, on which the NFC antenna is arranged, such that electromagnetic waves radiated by the NFC antenna are received by the auxiliary antenna. For example, the casing may be configured to be attached by at least one of friction fit, form fit and a magnet to the substrate, on which the NFC antenna is arranged, by at least partly accommodating the substrate, on which the NFC antenna is arranged, such that the auxiliary antenna and the NFC antenna are aligned in a main direction of radiation of the NFC antenna.

That is, the casing may be at least partly imposed on or at least partly put on the substrate, on which the NFC antenna is arranged. The term "case" may be used as a synonym for the term "casing". Herein, a casing may be for example a cap. The cap may be referred to as "extender cap".

Herein, a material allowing electromagnetic waves to pass through may be for example plastic, e.g. comprising one or more types of plastic. The casing may be made of plastic, e.g. one or more types of plastic. Any other type of material allowing electromagnetic waves to pass through may be used herein.

Optionally, the casing and the substrate comprise means for a mechanical connection such that the means for a mechanical connection of the casing and the means for a mechanical connection of the substrate are aligned when the casing at least partly accommodates the substrate. In addition or alternatively, one of the casing and the communication module may comprise one or more hooks and the other of the casing and the communication module may comprise receiving means for the one or more hooks such that the one or more hooks hook in the receiving means when the casing at least partly accommodates the substrate. In addition or alternatively, one of the casing and the substrate may comprise a nipple and the other of the casing and substrate may comprise a recess for receiving the nipple such that the nipple snaps in the recess when the casing at least partly accommodates the substrate.

For example, the means for the mechanical connection may be one or more cavities or recesses adapted for screwing. Thus, when the aforementioned one or more cavities or recesses of the casing and the corresponding one or more cavities or recesses of the substrate are aligned, the casing may be screwed to the substrate using one or more screws via the cavities or recesses of the casing and substrate. In case the communication module comprises the receiving means for the one or more hooks, the receiving means may be in a substrate, e.g. PCB, of the communication module.

Optionally, the auxiliary antenna is arranged on a second substrate made of a material that allows electromagnetic waves to pass through, and the second substrate is configured to be attached by at least one of friction fit, form fit and a magnet to the substrate, on which the NFC antenna is arranged, by being at least partly arranged on the substrate, on which the NFC antenna is arranged.

In other words, the second substrate may be configured to be attached by at least one of friction fit, form fit and a magnet relative to the NFC antenna to the substrate, on which the NFC antenna is arranged, by being at least partly arranged on the substrate, on which the NFC antenna is arranged. The second substrate may be configured to be attached by at least one of friction fit, form fit and a magnet to the substrate, on which the NFC antenna is arranged, by being at least partly arranged on the substrate, on which the NFC antenna is arranged, such that electromagnetic waves radiated by the NFC antenna are received by the auxiliary antenna. For example, the second substrate may be configured to be attached by at least one of friction fit, form fit and a magnet to the substrate, on which the NFC antenna is arranged, by being at least partly arranged on the substrate, on which the NFC antenna is arranged, such that the auxiliary antenna and the NFC antenna are aligned in a main direction of radiation of the NFC antenna.

The second substrate may be a PCB. The second substrate may be made of plastic, e.g. one or more types of plastic.

Optionally, the substrate and the second substrate comprise means for a mechanical connection such that the means for a mechanical connection of the substrate and the means for a mechanical connection of the second substrate are aligned when the second substrate is at least partly arranged on the substrate. In addition or alternatively, one of the second substrate and the communication module may comprise one or more hooks and the other of the second substrate and the communication module may comprise receiving means for the one or more hooks such that the one or more hooks hook in the receiving means when the second substrate is at least partly arranged on the substrate. In addition or alternatively, one of the substrate and the second substrate may comprise a nipple and the other of the substrate and the second substrate may comprise a recess for the nipple such that the nipple snaps in the recess when the second substrate is at least partly arranged on the substrate.

For example, the means for the mechanical connection may be one or more cavities or recesses adapted for screwing. Thus, when the aforementioned one or more cavities or recesses of the substrate and the corresponding one or more cavities or recesses of the second substrate are aligned, the second substrate may be screwed to the substrate using one or more screws via the cavities or recesses of the casing and substrate. In case the communication module comprises the receiving means for the one or more hooks, the receiving means may be in a substrate, e.g. PCB, of the communication module.

In order to achieve the system according to the first aspect of the present invention, some or all of the above described optional features may be combined with each other.

According to a second aspect of the invention a system is provided. The system comprises a communication module arranged on a printed circuit board (PCB). The system comprises an NFC antenna arranged on the PCB or connected with a connection portion of the PCB, wherein the NFC antenna is electrically connected with the communication module via a feeding line. The system comprises an antenna arrangement with an antenna. The PCB or the connection portion comprises one or more breaking points such that a part of the PCB, on which the NFC antenna is arranged, or the connection portion is configured to be broken away from the PCB at the one or more breaking points. An element of the antenna arrangement is configured for being electrically connected with the feeding line of the PCB and attached by at least one of friction fit, form fit and a magnet to the PCB at the one or more breaking points when the part of the PCB, on which the NFC antenna is arranged, or the connection portion is broken away from the PCB.

The one or more breaking points allow the NFC antenna to be broken away from the communication module. This allows preventing a NFC communication function of the communication module and at the same time allows a cost effective manufacturing of the communication module. Namely, for preventing the NFC communication function of the communication module a manufacturing of the communication module does not need to be changed (e.g. by manufacturing PCBs, on which the communication module is present and the NFC antenna is present or not depending on whether the NFC communication function is desired or not, respectively). It is sufficient to break the part of the PCB, on which the NFC antenna is arranged, or the connection portion of the PCB away from the PCB to deactivate the NFC communication function. Namely, this breaking away disconnects the NFC antenna from the communication module. At the same time, the antenna arrangement of the system allows to establish again a NFC communication function for the communication module after the NFC antenna has been removed by performing a break at the breaking points of the PCB. The breaking at the breaking points of the PCB may be performed e.g. by fingers of a person and/or with a tool, such as pincers.

The element of the antenna arrangement may be configured such that when it is electrically connected with the feeding line of the PCB, the antenna of the antenna arrangement is electrically connected with the feeding line of the PCB. That is, the element of the antenna arrangement allows the antenna of the antenna arrangement to be electrically connected with an entity, such as the feeding line of the PCB, by establishing an electrical connection with the entity.

The description of the system of the first aspect, e.g. the description of the communication module and antenna arrangement of the system of the first aspect, is correspondingly valid for the system of the second aspect. The system of the second aspect provides the same advantages as the system of the first aspect, outlined above.

Optionally, the element of the antenna arrangement is a casing made of non-conductive material comprising one or more electrical contacts that are electrically connected with the antenna of the antenna arrangement. The casing may be configured to be attached by at least one of friction fit, form fit and a magnet to a part of the PCB, at which the feeding line is arranged, by at least partly accommodating the part of the PCB, at which the feeding line is arranged, when the part of the PCB, on which the NFC antenna is arranged, or the connection portion is broken away from the PCB. The one or more electrical contacts are configured to be electrically connected with the feeding line when the casing at least partly accommodates the part of the PCB, at which the feeding line is arranged. The casing may be made of plastic, e.g. one or more types of plastic.

That is, the casing may be at least partly imposed on or at least partly put on the part of the PCB, at which the feeding line is arranged, when the part of the PCB, on which the NFC antenna is arranged, or the connection portion is broken away from the PCB. The one or more electrical contacts may comprise or may be for example one or more blade contacts.

The NFC antenna may be one or more electromagnetic coils. The NFC antenna may be a printed antenna, such as microstrip antenna or antenna patch. For example, the NFC antenna may be printed on a printed circuit board (PCB) being the substrate, on which the NFC antenna may be arranged. The NFC antenna is not limited to a specific antenna type.

The antenna of the antenna arrangement may be one or more electromagnetic coils. The antenna of the antenna arrangement may be a printed antenna, such as microstrip antenna or antenna patch. For example, the antenna of the antenna arrangement may be printed on a printed circuit board (PCB). The antenna of the antenna arrangement is not limited to a specific antenna type. The antenna of the antenna arrangement may be a NFC antenna.

Optionally, the casing and the PCB comprise means for a mechanical connection such that the means for a mechanical connection of the casing and the means for a mechanical connection of the PCB are aligned when the part of the PCB, on which the NFC antenna is arranged, or the connection portion is broken away from the PCB and the casing at least partly accommodates the part of the PCB, at which the feeding line is arranged. In addition or alternatively, one of the casing and the communication module may comprise one or more hooks and the other of the casing and the communication module may comprise receiving means for the one or more hooks such that the one or more hooks hook in the receiving means when the part of the PCB, on which the NFC antenna is arranged, or the connection portion is broken away from the PCB and the casing at least partly accommodates the part of the PCB, at which the feeding line is arranged. In addition or alternatively, one of the casing and the PCB may comprise one or more hooks and the other of the casing and the PCB may comprise receiving means for the one or more hooks such that the one or more hooks hook in the receiving means when the part of the PCB, on which the NFC antenna is arranged, or the connection portion is broken away from the PCB and the casing at least partly accommodates the part of the PCB, at which the feeding line is arranged. In addition or alternatively, one of the casing and the PCB may comprise a nipple and the other of the casing and PCB may comprise a recess for receiving the nipple such that the nipple snaps in the recess when the part of the PCB, on which the NFC antenna is arranged, or the connection portion is broken away from the PCB and the casing at least partly accommodates the part of the PCB, at which the feeding line is arranged.

For example, the means for the mechanical connection may be one or more cavities or recesses adapted for screwing. Thus, when the aforementioned one or more cavities or recesses of the casing and the corresponding one or more cavities or recesses of the PCB are aligned, the casing may be screwed to the PCB using one or more screws via the cavities or recesses of the casing and PCB.

Optionally, the element of the antenna arrangement is a substrate made of non-conductive material comprising one or more electrical contacts that are electrically connected with the antenna of the antenna arrangement. The substrate may be configured to be attached by at least one of friction fit, form fit and a magnet to a part of the PCB, at which the feeding line is arranged, by at least partly arranging the substrate on the part of the PCB, at which the feeding line is arranged, when the part of the PCB, on which the NFC antenna is arranged, or the connection portion is broken away from the PCB. The one or more electrical contacts are configured to be electrically connected with the feeding line when the substrate is at least partly arranged on the part of the PCB, at which the feeding line is arranged.

The substrate may be made of plastic, e.g. one or more types of plastic. The one or more electrical contacts may comprise or may be for example one or more blade contacts.

Optionally, the substrate and the PCB comprise means for a mechanical connection such that the means for a mechanical connection of the substrate and the means for a mechanical connection of the PCB are aligned when the part of the PCB, on which the NFC antenna is arranged, or the connection portion is broken away from the PCB and the substrate is at least partly arranged on the part of the PCB, at which the feeding line is arranged. In addition or alternatively, one of the substrate and the communication module may comprise one or more hooks and the other of the substrate and the communication module may comprise receiving means for the one or more hooks such that the one or more hooks hook in the receiving means when the part of the PCB, on which the NFC antenna is arranged, or the connection portion is broken away from the PCB and the substrate is at least partly arranged on the part of the PCB, at which the feeding line is arranged. In addition or alternatively, one of the substrate and the PCB may comprise one or more hooks and the other of the substrate and the PCB may comprise receiving means for the one or more hooks such that the one or more hooks hook in the receiving means when the part of the PCB, on which the NFC antenna is arranged, or the connection portion is broken away from the PCB and the substrate is at least partly arranged on the part of the PCB, at which the feeding line is arranged. In addition or alternatively, one of the substrate and the PCB may comprise a nipple and the other of the substrate and the PCB may comprise a recess for the nipple such that the nipple snaps in the recess when the part of the PCB, on which the NFC antenna is arranged, or the connection portion is broken away from the PCB and the substrate is at least partly arranged on the part of the PCB, at which the feeding line is arranged.

For example, the means for the mechanical connection may be one or more cavities or recesses adapted for screwing. Thus, when the aforementioned one or more cavities or recesses of the substrate and the corresponding one or more cavities or recesses of the PCB are aligned, the substrate may be screwed to the PCB using one or more screws via the cavities or recesses of the casing and PCB.

The description with regard to the system according to the first aspect of the present invention is correspondingly valid for the system according to the second aspect of the present invention.

The description with regard to the system according to the second aspect of the present invention is correspondingly valid for the system according to the first aspect of the present invention.

The system according to the second aspect achieves the same advantages as the system according to the first aspect.

In order to achieve the system according to the second aspect of the present invention, some or all of the above described optional features may be combined with each other.

According to a third aspect of the invention a luminaire is provided. The luminaire comprises a housing, and a system according to the first aspect or a system according to the second aspect. The system is arranged inside the housing.

The communication module of the system may be integrated in a lighting means driver for driving lighting means, e.g. the lighting means of the luminaire. The communication module of the system may be electrically connected with the lighting means driver. The lighting means of the luminaire may comprise or may be one or more LEDs. In this case, the lighting means driver is a LED driver configured to drive the one or more LEDs. The communication module may a separate module, e.g. with regard to a lighting means driver. For example, the communication module may be a DALI gateway or any other communication protocol gateway.

A part of the housing in the direction of a main radiation direction of the antenna of the antenna arrangement may allow electromagnetic waves to pass through. For example, the aforementioned part of the housing may be made of a material allowing electromagnetic waves to pass through, such as plastic.

Optionally, the antenna of the antenna arrangement is arranged on a surface of the housing.

The surface of the housing may be an inner surface or outer surface of the housing. The antenna may be arranged on an inner surface of the housing at a part of the housing that allows electromagnetic waves to pass through. For example, the part of the housing may be made of a material allowing electromagnetic waves to pass through, such as plastic.

The antenna of the antenna arrangement may be arranged inside the housing near the surface of the housing such that a wireless communication, e.g. NFC communication, between the antenna of the antenna arrangement and an element outside the housing may be performed. For example, the antenna of the antenna arrangement may be arranged inside the housing with a distance equal to or smaller than 4 cm, optionally 3 cm, more optionally 2 cm away from an inner surface of the housing.

The description with regard to the system according to the first aspect of the present invention is correspondingly valid for the luminaire according to the third aspect of the present invention. The description with regard to the system according to the second aspect of the present invention is correspondingly valid for the luminaire according to the third aspect of the present invention.

The luminaire according to the third aspect achieves the same advantages as the system according to the first aspect and the system according to the second aspect.

An advantage of the system of the first aspect and the system of the second aspect is that the antenna arrangement may be re-used, because the attachment of the antenna arrangement by at least one of friction fit, form fit and a magnet may be a detachable attachment.

In order to achieve the luminaire according to the third aspect of the present invention, some or all of the above described optional features may be combined with each other.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a system according to an embodiment of the present invention.
- **FIG. 2**: shows an example of a system according to an embodiment of the present invention.
- **FIG. 3**: shows an example of a system according to an embodiment of the present invention. FIG. 3 (a) shows a state in which the antenna arrangement of the system is not attached to the substrate of the system, on which the NFC antenna of the system is arranged. FIG. 3 (b) shows a state in which the antenna arrangement of the system is attached to the substrate of the system, on which the NFC antenna of the system is arranged
- **FIG. 4**: shows an example of a system according to an embodiment of the present invention.
- **FIG. 5**: shows an example of a system according to an embodiment of the present invention.
- **FIG. 6**: shows the system of FIG. 5, when the part of the PCB, on which the NFC antenna is arranged, is broken away from the PCB and the element of the antenna arrangement is electrically connected with the feeding line of the PCB and attached by at least one of friction fit, form fit and a magnet to the PCB at the one or more breaking points.

In the FIGs., corresponding elements have the same reference signs. The proportions and dimensions of the elements shown in the FIGs. do not represent the elements of the system to scale, but are merely chosen to describe the structure and function of the elements of the system.

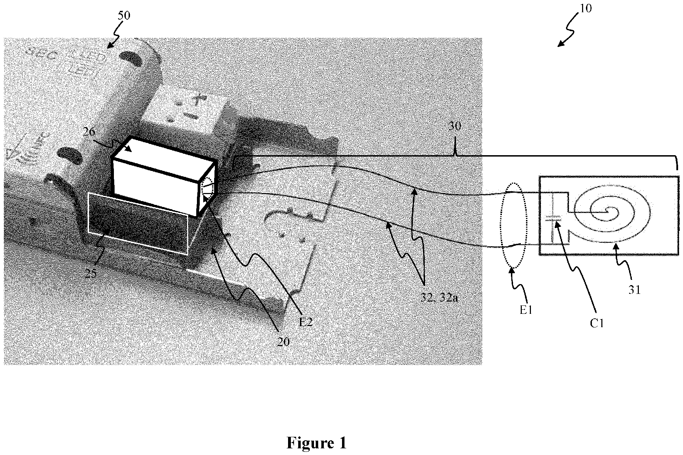

**FIG. 1** shows an example of a system according to an embodiment of the present invention. The system of FIG. 1 is an example of the system according to the first aspect of the present invention. The description of the system of the first aspect is correspondingly valid for the system of FIG. 1.

The system 10 of FIG. 1 comprises a communication module 20 with a nearfield communication (NFC) antenna unit 25 that is part of the communication module 20 or electrically connected with the communication module 20. As shown in FIG. 1, the communication module 20 may be electrically connected with a driver 50 for driving lighting means. Optionally, the communication module 20 may be integrated in the driver 50. The driver 50 of FIG. 1 is for example an LED driver for driving one or more LEDs. This is only by way of example and, does not limit the present invention. The driver 50 may be part of the system 10 or may not be part of the system 10. The communication module 20 may be detachably electrically connected with the driver 50 or detachably integrated in the driver 50.

When the NFC antenna of the antenna unit 25 is arranged on a substrate, e.g. a printed circuit board (PCB), the NFC antenna may be part of the communication module 20 or electrically connected with the communication module 20. For example, the NFC antenna may be printed on the substrate being a PCB. The NFC antenna is not limited to such antenna type. For example, the NFC antenna may be implemented as outlined in the description of the system according to the first aspect.

The system 10 of FIG. 1 comprises an antenna arrangement 30 with an antenna 31. The antenna 31 may be implemented as outlined in the description of the system according to the first aspect. An element 32 of the antenna arrangement is configured for being attached by at least one of friction fit, form fit and a magnet to the communication module 20 or a substrate, on which the NFC antenna may be arranged, such that the antenna 31 of the antenna arrangement 30 is coupled with the NFC antenna. Optionally, the element 32 of the antenna arrangement 30 is configured for being detachably attached by at least one of friction fit, form fit and the magnet. That is, the aforementioned attachment may be a detachable attachment. This means that once the element 32 is attached by at least one of friction fit, form fit and a magnet to an entity, such as the communication module 20, it may be detached again without a negative effect, such as a disturbance, on the entity or the element 32. The communication module 20 is configured to wirelessly communicate via the NFC antenna and the antenna 31 of the antenna arrangement 30 when the element 32 of the antenna arrangement is attached to the communication module 20 or the substrate, on which the NFC antenna may be arranged, such that the antenna 31 of the antenna arrangement 30 is coupled with the NFC antenna.

According to the example of FIG. 1, the element 32 of the antenna arrangement 30 is a feeding line 32a that is electrically connected at a first end E1 of its two ends E1, E2 with the antenna 31 of the antenna arrangement 30. A second end E2 of the two ends E1, E2 of the feeding line 32a is configured to be attached by at least one of friction fit, form fit and a magnet to an electrical connector 26 of the communication module 20 or of the substrate, on which the NFC antenna may be arranged, for being electrically connected with the electrical connector 26. The electrical connector 26 is configured such that the antenna 31 is electrically connected in parallel with the NFC antenna when the second end E2 of the two ends E1, E2 of the feeding line 32a is electrically connected with the electrical connector 26. As shown in FIG. 1, the feeding line 32a may comprise two wires, e.g. in the form of one or two cables. This is only by way of example and the feeding line 32a may be differently implemented.

Since the antenna 31 of the antenna arrangement 30 is electrically connected by the feeding line 32a in parallel to the NFC antenna, the antenna arrangement 30 may comprise a balancing circuit that is electrically connected, e.g. in parallel, with the antenna 31 of the antenna arrangement 30 for balancing the antenna 31 of the antenna arrangement 30 and the NFC antenna. For example, as shown in FIG. 1, the balancing circuit may comprise a capacitor C1 that is electrically connected in parallel with the antenna 31. The balancing circuit may be differently implemented, e.g. alternatively or additionally comprising a different electrical component compared to the capacitor. The balancing may be done according to any means known in the art.

The electrical connector 26 may comprise a connection terminal and the second end E2 of the feeding line 32a may be configured to be electrically connected with the electrical connector 26 by being attached to the connection terminal by at least one of friction fit, form fit and a magnet.

Optionally, the electrical connector 26 is a female connector and the second end comprises a male connector as shown in the illustration of FIG. 1. Alternatively, the electrical connector is a male connector and the second end comprises a female connector.

The second end E2 of the feeding line 32a may be detachably attached to the connection terminal by at least one of friction fit, form fit and a magnet. This allows re-using the antenna arrangement 30 for different entities than the communication module 20. Moreover, the communication module 20 may be easily upgraded and downgraded with the additional antenna 31 of the antenna arrangement 30 by detachably attaching the feeding line 32a of the antenna arrangement 30 to the connection terminal and detaching the feeding line 32a from the connection terminal, respectively.

For further details, e.g. optional implementation forms, of the system 10 of FIG. 1 reference is made to the description of the system of the first aspect.

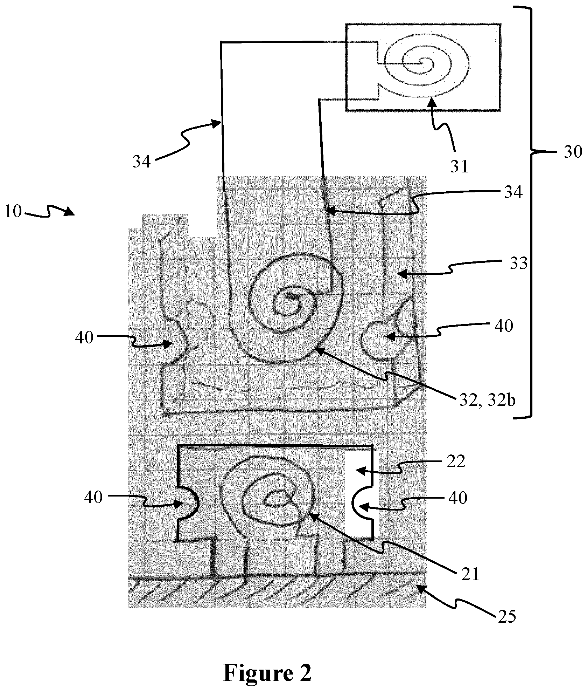

**FIG. 2** shows an example of a system according to an embodiment of the present invention. The system of FIG. 2 is an example of the system according to the first aspect of the present invention. The description of the system of the first aspect is correspondingly valid for the system of FIG. 2. The system 10 of FIG. 2 differs from the system 10 of FIG. 1 with regard to the element 32 of the antenna arrangement 30 that is configured for being attached by at least one of friction fit, form fit and a magnet. Thus, the description of the system 10 of FIG. 1 is correspondingly valid for the system 10 of FIG. 2 and in the following mainly the differences of the system 10 of FIG. 2 from the system 10 of FIG. 1 are described.

According to the example of FIG. 2, it is assumed that the NFC antenna 21 is arranged on a substrate 22. For example, the substrate 22 may be a PCB and the NFC antenna 21 may be printed on the PCB. The NFC antenna 21 is not limited to such antenna type. For example, the NFC antenna 21 may be implemented as outlined in the description of the system according to the first aspect. The description of the system 10 of FIG. 2 is correspondingly valid in case of a different type of NFC antenna 21. Further, according to the example of FIG. 2, the NFC antenna 21 is electrically connected with the communication module 20, e.g. with a PCB of the communication module 20 or a PCB on which the communication module 20 is arranged. This is only by way of example. That is, the NFC antenna 21 may be alternatively part of the communication module 20. In this case, the description of the system 10 of FIG. 2 is correspondingly valid.

In contrast to the element 32 of the antenna arrangement 30 being a feeding line 32a, as shown in FIG. 1, according to the example of FIG. 2, the element 32 of the antenna arrangement 30 is an auxiliary antenna 32b that is electrically connected with the antenna 31 of the antenna arrangement 30 via a feeding line 34. The auxiliary antenna 32b may be implemented as outlined in the description of the system according to the first aspect. The auxiliary antenna 32b may be configured to be attached (e.g. detachably attached) by at least one of friction fit, form fit and a magnet to the substrate 22, on which the NFC antenna 21 is arranged, such that electromagnetic waves radiated by the NFC antenna 21 are received by the auxiliary antenna 32b. Thus, according to the example of FIG. 1, a coupling between the NFC antenna 21 and the antenna 31 of the antenna arrangement 30 is achieved by a wired connection, in the form of the feeding line 32a. In contrast thereto, according to the example of FIG. 2, the coupling between the NFC antenna 21 and the antenna 31 of the antenna arrangement 30 is wirelessly achieved, e.g. by an electromagnetic coupling. The coupling between the NFC antenna 21 and the antenna 31 of the antenna arrangement 30 allows the communication module 20 to wirelessly communicate via the NFC antenna 21 and the antenna 31 of the antenna arrangement 30.

As shown in FIG. 2, the auxiliary antenna 32b of the antenna arrangement 30 may optionally be integrated in a casing 33 of the antenna arrangement 30. The casing 33 is made of a material that allows electromagnetic waves to pass through, such as plastic. The casing 33 is configured to be attached by at least one of friction fit, form fit and a magnet to the substrate 22, on which the NFC antenna 21 is arranged, by at least partly accommodating the substrate 22, on which the NFC antenna 21 is arranged. In other words, the casing 33 may be at least partly imposed on or at least partly put on the substrate 22, on which the NFC antenna 21 is arranged, for achieving an attachment of the casing 33 and, thus, the auxiliary antenna 32b by at least one of friction fit, form fit and a magnet to the substrate 22, on which the NFC antenna 21 is arranged.

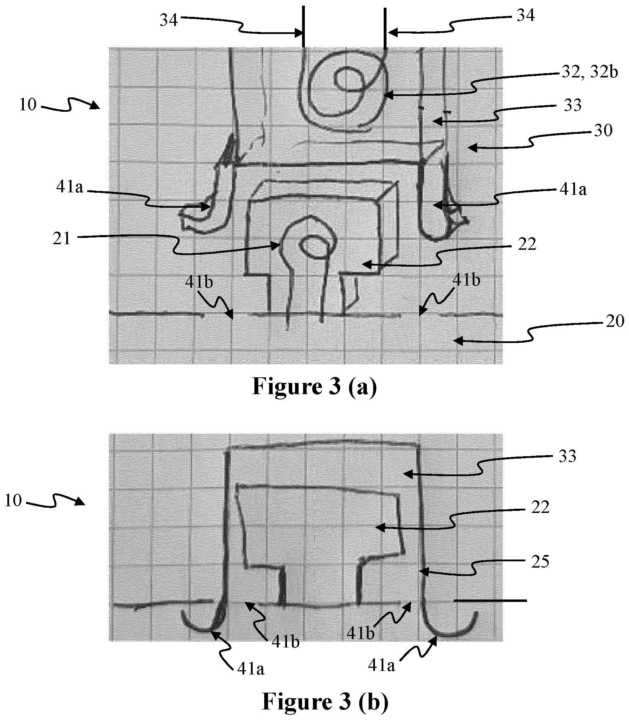

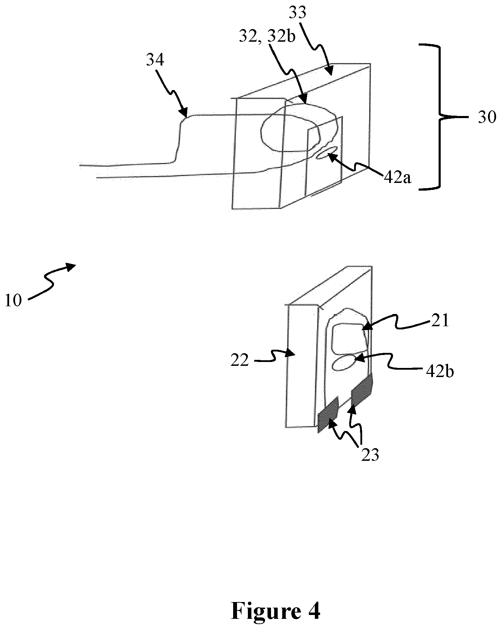

According to the example of FIG. 2, for achieving the attachment of the casing 33 to the substrate 22, the casing 33 and the substrate 22 may comprise means 40 for a mechanical connection such that the means 40 for a mechanical connection of the casing 33 and the means 40 for a mechanical connection of the substrate 22 are aligned when the casing 33 at least partly accommodates the substrate 22. As shown in FIG. 2, the means 40 for the mechanical connection may be for example one or more cavities or recesses adapted for screwing. This is only by way of example and, thus, the means 40 for mechanical connection may be differently implemented. Thus, when the aforementioned one or more cavities or recesses 40 of the casing 33 and the corresponding one or more cavities or recesses 40 of the substrate 22 are aligned, the casing 33 may be screwed to the substrate 22 using one or more screws via the cavities or recesses 40 of the casing 33 and substrate 22. According to the example of FIG. 2, each of the casing 33 and the substrate 22 comprises two means 40 for mechanical connection. This is only by way of example and may be different. The casing 33 may be differently attached to the substrate 22 compared to the attachment described above and exemplarily shown in FIG. 2. Examples of such different attachment are shown in FIGs. 3 and 4.

For further details, e.g. optional implementation forms, of the system 10 of FIG. 2 reference is made to the description of the system of the first aspect.

**FIG. 3** shows an example of a system according to an embodiment of the present invention. FIG. 3 (a) shows a state in which the antenna arrangement of the system is not attached to the substrate of the system, on which the NFC antenna of the system is arranged. FIG. 3 (b) shows a state in which the antenna arrangement of the system is attached to the substrate of the system, on which the NFC antenna of the system is arranged. The system 10 of FIG. 3 corresponds to the system 10 of FIG. 2, wherein the casing 33 of the system 10 of FIG. 3 is differently implemented compared to the casing 33 of the system 10 of FIG. 2 with regard to attaching the casing 33 to the substrate 22, on which the NFC antenna 21 is arranged. The description of the system 10 of FIG. 2 is correspondingly valid for the system 10 of FIG. 3 and in the following mainly the difference of the system 10 of FIG. 3 from the system 10 of FIG. 2 is described. In FIG. 3, the antenna 31 of the antenna arrangement 30 that is electrically connected via the feeding line 34 of the antenna arrangement 30 with the auxiliary antenna 32b of the antenna arrangement 30 is not shown.

As shown in FIGs. 3 (a) and 3 (b), making the FIG. 3, the casing 33 may comprise one or more hooks 41a and the communication module 20, e.g. a PCB of the communication module 20, may comprise receiving means 41b for the one or more hooks such that the one or more hooks 41a hook in the receiving means 41b when the casing 33 at least partly accommodates the substrate 22, on which the NFC antenna 21 is arranged. The provision of the one or more hooks 41a and the receiving means 41b for the one or more hooks may be vice versa (not shown in FIG. 3). That is, the communication module 20, e.g. a PCB of the communication module 20, may comprise the one or more hooks 41a and the casing 33 may comprise the receiving means 41b for the one or more hooks. The description of FIG. 3 is correspondingly valid for that case. FIG. 3 shows two hooks 41a and thus two receiving means 41b for the two hooks 41a. This is only by way of example and, thus, the number of hooks 41a and receiving means 41b may be different. The form of the hooks 41a and the receiving means 41b shown in FIG. 3 is only by way of example and may be different.

FIG. 3 (a) shows a state, in which the casing 33 does not yet accommodate at least partly the substrate 22 and, thus, the hooks 41a are not hooked in the receiving means 41b. FIG. 3 (b) shows a state, in which the casing 33 accommodates the substrate 22 and, thus, the hooks 41 are hooked in the receiving means 41b.

For further details, e.g. optional implementation forms, of the system 10 of FIG. 3 reference is made to the description of the system of the first aspect.

**FIG. 4** shows an example of a system according to an embodiment of the present invention. The system 10 of FIG. 4 corresponds to the system 10 of FIG. 2, wherein the casing 33 of the system 10 of FIG. 4 is differently implemented compared to the casing 33 of the system 10 of FIG. 2 with regard to attaching the casing 33 to the substrate 22, on which the NFC antenna 21 is arranged. The description of the system 10 of FIG. 2 is correspondingly valid for the system 10 of FIG. 4 and in the following mainly the difference of the system 10 of FIG. 4 from the system 10 of FIG. 2 is described. In FIG. 4, the antenna 31 of the antenna arrangement 30 that is electrically connected via the feeding line 34 of the antenna arrangement 30 with the auxiliary antenna 32b of the antenna arrangement 30 is not shown.

As shown in FIG. 4, the casing 33 may comprise a nipple 42a and the substrate 22 may comprise a recess 42b for receiving the nipple 42a such that the nipple snaps in the recess 42b when the casing 33 at least partly accommodates the substrate 22. The provision of the nipple 42a and the recess for receiving the nipple 42b may be vice versa (not shown in FIG. 4). That is, the substrate 22 may comprise the nipple 42a and the casing 33 may comprise the recess 42b for receiving the nipple 42a. The description of FIG. 4 is correspondingly valid for that case. In FIG. 4, the electrical contacts 23 for electrical connecting the NFC antenna 21, e.g. with a feeding circuit (not shown in FIG. 4) of the communication module, are exemplarily indicated.

For further details, e.g. optional implementation forms, of the system 10 of FIG. 4 reference is made to the description of the system of the first aspect.

For providing an example of a system according to the present invention one or more features of the system 10 of any one of Figures 2, 3 and 4 may be combined with each other.

In the examples of Figures 2,3 and 4 a casing 33, in which the auxiliary antenna 32b is integrated, is used for attaching the auxiliary antenna 32b by at least one of friction fit, form fit and a magnet to the substrate 22, on which the NFC antenna 21 is arranged, such that electromagnetic waves radiated by the NFC antenna 21 are received by the auxiliary antenna 32b. Alternatively, a substrate may be used for attaching the auxiliary antenna 32b by at least one of friction fit, form fit and a magnet to the substrate 22 such that electromagnetic waves radiated by the NFC antenna 21 are received by the auxiliary antenna 32b (not shown in the FIGs.). In this optional alternative case, the auxiliary antenna 32b is arranged on the substrate (which is referred as second substrate in order to be distinguishable from the substrate 22, on which the NFC antenna 21 is arranged). The second substrate is made of a material that allows electromagnetic waves to pass through, and the second substrate is configured to be attached by at least one of friction fit, form fit and a magnet to the substrate 22, on which the NFC antenna 21 is arranged, by being at least partly arranged on the substrate 22, on which the NFC antenna 21 is arranged. The description of FIGs. 2, 3 and 4 are correspondingly valid for the optional case that the auxiliary antenna 32b is arranged on a substrate (second substrate) instead of being integrated in the casing 33. For instance, the description of the means for attaching the casing 33 and, thus, the auxiliary antenna 32b to the substrate 22, on which the NFC antenna 21 is arranged, described with regard to FIGs. 2,3 and 4 is correspondingly valid. That is, at least one of these means may be implemented in case the auxiliary antenna 32b is arranged on the second substrate. For further information thereon, please refer to the corresponding description of the system of the first aspect.

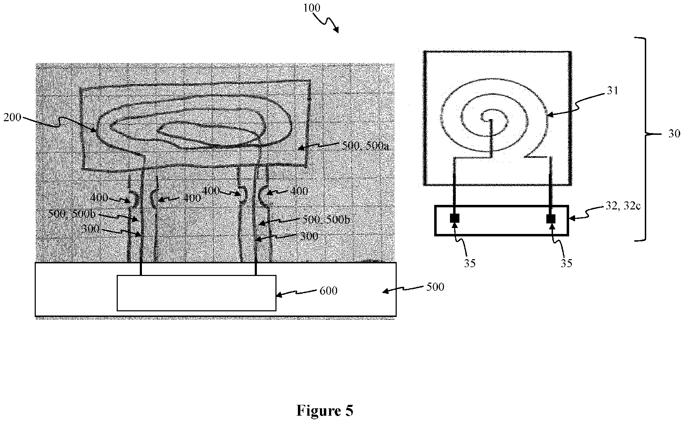

**FIG. 5** shows an example of a system according to an embodiment of the present invention. The system of FIG. 5 is an example of the system according to the second aspect of the present invention. The description of the system of the second aspect is correspondingly valid for the system of FIG. 5.

The system 100 comprises a communication module 600 arranged on a printed circuit board 500 (PCB). The system 100 comprises an NFC antenna 200 arranged on the PCB 500, wherein the NFC antenna 200 is electrically connected with the communication module 600 via a feeding line 300. The part of the PCB 500, on which the NFC antenna 200 is arranged, is labeled with the reference sign "500a". As shown in FIG. 5, the feeding line 300 may comprise two wires, e.g. in the form of one or two cables. This is only by way of example and the feeding line 300 may be differently implemented.

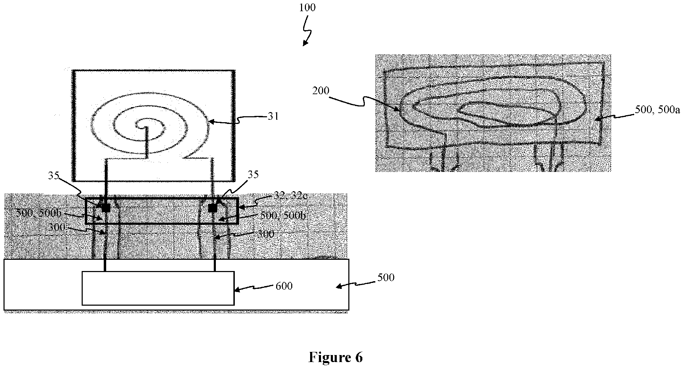

As shown in FIG. 5, the system further comprises an antenna arrangement 30 with an antenna 31. The PCB 500 comprises one or more breaking points 400 such that the part 500a of the PCB 500, on which the NFC antenna 200 is arranged, is configured to be broken away from the PCB 500 at the one or more breaking points 400. The form of the PCB 500 shown in Figure 5 is only by way of example and, thus, may be different. For example, the PCB 500 may be continuous. An element 32 of the antenna arrangement 30 is configured for being electrically connected with the feeding line 300 of the PCB 500 and attached by at least one of friction fit, form fit and a magnet to the PCB 500 at the one or more breaking points 400 when the part 500a of the PCB 500, on which the NFC antenna 200 is arranged, is broken away from the PCB 500. Such a state is exemplarily shown in FIG. 6. The element 32 of the antenna arrangement 30 is configured such that when it is electrically connected with the feeding line 300 of the PCB 500, the antenna 31 of the antenna arrangement 30 is electrically connected with the feeding line 300 of the PCB 500 (this is exemplarily shown in FIG. 6). That is, the element 32 of the antenna arrangement 30 allows the antenna 31 of the antenna arrangement 30 to be electrically connected with an entity, such as the feeding line 300 of the PCB 500, by establishing an electrical connection with the entity.

Alternatively to the example of FIG. 5, the NFC antenna 200 may be connected with a connection portion of the PCB 500 (not shown in FIG. 5), wherein the NFC antenna 200 is electrically connected with the communication module 600 via the feeding line 300. The PCB 500 or the connection portion comprises one or more breaking points 400 such that the connection portion is configured to be broken away from the PCB 500 at the one or more breaking points 400. The element 32 of the antenna arrangement 30 is configured for being electrically connected with the feeding line 300 of the PCB 500 and attached by at least one of friction fit, form fit and a magnet to the PCB 500 at the one or more breaking points 400 when the connection portion is broken away from the PCB 500. The description of FIGs. 5 and 6 is correspondingly valid for the optional case that the NFC antenna 200 is connected with the connection portion of the PCB 500. In the following it is assumed that the NFC antenna 200 is arranged on the PCB 500, as shown in FIGs. 5 and 6.

Optionally, the element 32 of the antenna arrangement 30 is a casing 32c made of non-conductive material comprising one or more electrical contacts 35 that are electrically connected with the antenna 31 of the antenna arrangement 30. The one or more electrical contacts 35 may be for example one or more blade contacts. In Figures 5 and 6 two electrical contacts 35 are shown. This is only by way of example and may be different. The casing 32c may be configured to be attached by at least one of friction fit, form fit and a magnet to a part 500b of the PCB 500, at which the feeding line 300 is arranged, by at least partly accommodating the part 500b of the PCB 500, at which the feeding line 300 is arranged, when the part 500a of the PCB 500, on which the NFC antenna 200 is arranged, is broken away from the PCB 500. The one or more electrical contacts 35 are configured to be electrically connected with the feeding line 300 when the casing 32c at least partly accommodates the part 500b of the PCB 500, at which the feeding line 300 is arranged. This is exemplarily shown in FIG. 6. FIG. 6 shows the state, when the part 500a of the PCB 500, on which the NFC antenna 200 is arranged, is broken away from the PCB 500. As shown in FIG. 6, the casing 32c of the antenna arrangement 30 may at least partly accommodate the part 500b of the PCB 500, at which the feeding line 300 is arranged. As a result, the one or more electrical contacts 35 are electrically connected with the feeding line 300, as shown in FIG. 6.

The attachment of the casing 32c with the PCB 500 and/or the communication module 600 may be implemented as outlined with regard to the examples of FIGs. 2 to 4.

Instead of a casing, the element 32 of the system 100 may be a substrate 32c made of non-conductive material comprising the one or more electrical contacts 35 that are electrically connected with the antenna 31 of the antenna arrangement 30. The substrate 32c may be configured to be attached by at least one of friction fit, form fit and a magnet to the part 500b of the PCB 500, at which the feeding line 300 is arranged, by at least partly arranging the substrate 32c on the part 500b of the PCB 500, at which the feeding line 300 is arranged, when the part 500a of the PCB 500, on which the NFC antenna 200 is arranged, is broken away from the PCB 500. The one or more electrical contacts 35 are configured to be electrically connected with the feeding line 300 when the substrate 32c is at least partly arranged on the part 500b of the PCB, at which the feeding line 300 is arranged. This is exemplarily shown in FIG. 6. As shown in FIG. 6, the substrate 32c of the antenna arrangement 30 may be at least partly arranged on the part 500b of the PCB 500, at which the feeding line 300 is arranged. As a result, the one or more electrical contacts 35 are electrically connected with the feeding line 300, as shown in FIG. 6.

The attachment of the substrate 32c with the PCB 500 and/or the communication module 600 may be implemented as outlined with regard to the examples of FIGs. 2 to 4.

For further details, e.g. optional implementation forms, of the system 100 of FIG. 5 reference is made to the description of the system of the second aspect.

FIG. 6 shows the system of FIG. 5, when the part 500a of the PCB 500, on which the NFC antenna 200 is arranged, is broken away from the PCB 500 and the element 32 of the antenna arrangement 30 is electrically connected with the feeding line 300 of the PCB 500 and attached by at least one of friction fit, form fit and a magnet to the PCB 500 at the one or more breaking points 400. The description of FIG. 5 is correspondingly valid for the description of the system 100 of FIG. 6.

When the element 32 of the antenna arrangement 30 is the casing 32c, as described with regard to FIG. 5, FIG. 6 shows that the casing 32c at least partly accommodates the part 500b of the PCB 500, at which the feeding line 300 is arranged. That is, FIG. 6 shows that the casing 32c is imposed on or put on the part 500b of the PCB 500, at which the feeding line 300 is arranged. As a result, the antenna arrangement 30 is attached to the PCB 500 and the antenna 31 of the antenna arrangement 30 is electrically connected via the one or more electrical contacts 35 with the feeding line 300 and, thus, the communication module 600.

When the element 32 of the antenna arrangement 30 is the substrate 32c, as described with regard to FIG. 5, FIG. 6 shows that the substrate 32c is at least partly arranged on the part 500b of the PCB 500, at which the feeding line 300 is arranged. As a result, the antenna arrangement 30 is attached to the PCB 500 and the antenna 31 of the antenna arrangement 30 is electrically connected via the one or more electrical contacts 35 with the feeding line 300 and, thus, the communication module 600.

For further details, reference is made to the description of the system of the second aspect.

The system 10 of FIGs. 1 to 4 or the system 100 of FIGs. 5 and 6 may be arranged in a housing of a luminaire for providing a NFC communication function to the luminaire, e.g. for the elements of the luminaire arranged in the housing. Such elements may be a lighting means driver of the luminaire for driving the lighting means of the luminaire, e.g. a LED driver for driving one or more LEDs of the luminaire.

When the system 10 or 100 is arranged in the luminaire's housing, the antenna 31 of the antenna arrangement 30 may be arranged on a surface of the housing. The surface may be an inner surface or outer surface of the housing. In case, the antenna 31 is arranged on an inner surface of the housing, at least a part of the housing in the direction of the main radiation direction of the antenna 31 allows electromagnetic waves to pass through. That is, the aforementioned part of the housing is a part of the housing at which electromagnetic weaves impinge that are radiated in the main radiation direction of the antenna 31. For example, the part of the housing may be made of a material allowing electromagnetic waves to pass through, such as plastic. Optionally, the antenna 31 of the antenna arrangement 30 may be arranged inside the housing near the surface of the housing such that a wireless communication, e.g. NFC communication, between the antenna 31 of the antenna arrangement 30 and an element outside the housing may be performed. Optionally, the luminaire's housing may allow electromagnetic waves to pass through. For example, the housing may be made of a material allowing electromagnetic waves to pass through, such as plastic.

For further information on the luminaire, reference is made to the luminaire of the third aspect.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A system (10) comprising
- a communication module (20) with a nearfield communication, NFC, antenna (21) that is part of the communication module (20) or electrically connected with the communication module (20), and
- an antenna arrangement (30) with an antenna (31); wherein
- an element (32) of the antenna arrangement (30) is configured for being attached, optionally detachably attached, by at least one of friction fit, form fit and a magnet to the communication module (20) or a substrate (22), on which the NFC antenna (21) is arranged, such that the antenna (31) of the antenna arrangement (30) is coupled with the NFC antenna (21), and
- the communication module (20) is configured to wirelessly communicate via the NFC antenna (21) and the antenna (31) of the antenna arrangement (30) when the element (32) of the antenna arrangement (30) is attached to the communication module (20) or the substrate (22), on which the NFC antenna (21) is arranged, such that the antenna (31) of the antenna arrangement (30) is coupled with the NFC antenna (21).

2. The system (10) according to claim 1, wherein
- the element (32) of the antenna arrangement is a feeding line (32a) electrically connected at a first end (E1) of its two ends (E1, E2) with the antenna (31) of the antenna arrangement (30),
- a second end (E2) of the two ends (E1, E2) of the feeding line (32a) is configured to be attached by at least one of friction fit, form fit and a magnet to an electrical connector of the communication module (20) or of the substrate (22) for being electrically connected with the electrical connector (26), and
- the electrical connector (26) is configured such that the antenna (31) is electrically connected in parallel with the NFC antenna (21) when the second end (E2) of the two ends (E1, E2) of the feeding line (32a) is electrically connected with the electrical connector.

3. The system (10) according to claim 2, wherein
- the electrical connector (26) comprises a connection terminal and the second end (E2) of the feeding line (32a) is configured to be electrically connected with the electrical connector (26) by being attached to the connection terminal by at least one of friction fit, form fit and a magnet.

4. The system (10) according to claim 2 or 3, wherein
- the electrical connector (26) is a female connector and the second end (E2) comprises a male connector, or
- the electrical connector (26) is a male connector and the second end (E2) comprises a female connector.

5. The system (10) according to claim 1, wherein
- the NFC antenna (21) is arranged on the substrate (22),
- the element (32) of the antenna arrangement (30) is an auxiliary antenna (32b) that is electrically connected with the antenna (31) of the antenna arrangement (30) via a feeding line (34), and
- the auxiliary antenna (32b) is configured to be attached by at least one of friction fit, form fit and a magnet to the substrate (22), on which the NFC antenna (21) is arranged, such that electromagnetic waves radiated by the NFC antenna (21) are received by the auxiliary antenna (32b).

6. The system (10) according to claim 5, wherein
- the auxiliary antenna (32b) is integrated in a casing (33) made of a material that allows electromagnetic waves to pass through, and
- the casing (33) is configured to be attached by at least one of friction fit, form fit and a magnet to the substrate (22), on which the NFC antenna (21) is arranged, by at least partly accommodating the substrate (22), on which the NFC antenna (21) is arranged.

7. The system (10) according to claim 6, wherein at least one of the following is true:
- the casing (33) and the substrate (22) comprise means (40) for a mechanical connection such that the means (40) for a mechanical connection of the casing (33) and the means (40) for a mechanical connection of the substrate (22) are aligned when the casing (33) at least partly accommodates the substrate (22),
- one of the casing (33) and the communication module (20) comprises one or more hooks (41a) and the other of the casing (33) and the communication module (20) comprises receiving means (41b) for the one or more hooks (41a) such that the one or more hooks (41a) hook in the receiving means (41b) when the casing (33) at least partly accommodates the substrate (22), and
- one of the casing (33) and the substrate (22) comprises a nipple (42a) and the other of the casing (33) and substrate (22) comprises a recess (42b) for receiving the nipple (42a) such that the nipple (42a) snaps in the recess (42b) when the casing (33) at least partly accommodates the substrate (22).

8. The system (10) according to claim 5, wherein
- the auxiliary antenna (32b) is arranged on a second substrate made of a material that allows electromagnetic waves to pass through, and
- the second substrate (32b) is configured to be attached by at least one of friction fit, form fit and a magnet to the substrate (22), on which the NFC antenna (21) is arranged, by being at least partly arranged on the substrate (22), on which the NFC antenna (21) is arranged.

9. The system (10) according to claim 8, wherein at least one of the following is true:
- the substrate (22) and the second substrate comprise means for a mechanical connection such that the means for a mechanical connection of the substrate (22) and the means for a mechanical connection of the second substrate are aligned when the second substrate is at least partly arranged on the substrate (22),
- one of the second substrate and the communication module (20) comprises one or more hooks and the other of the second substrate and the communication module (20) comprises receiving means for the one or more hooks such that the one or more hooks hook in the receiving means when the second substrate is at least partly arranged on the substrate (22), and
- one of the substrate (22) and the second substrate comprises a nipple and the other of the substrate (22) and the second substrate comprises a recess for the nipple such that the nipple snaps in the recess when the second substrate is at least partly arranged on the substrate (22).

10. A system (100) comprising
- a communication module (600) arranged on a printed circuit board (500), PCB,
- an NFC antenna (200) arranged on the PCB (500) or connected with a connection portion of the PCB (500), the NFC antenna (200) being electrically connected with the communication module (600) via a feeding line (300), and
- an antenna arrangement (30) with an antenna (31); wherein
- the PCB (500) or the connection portion comprises one or more breaking points (400) such that a part (500a) of the PCB (500), on which the NFC antenna (200) is arranged, or the connection portion is configured to be broken away from the PCB (500) at the one or more breaking points (400), and
- an element (32) of the antenna arrangement (30) is configured for being electrically connected with the feeding line (300) of the PCB (500) and attached by at least one of friction fit, form fit and a magnet to the PCB (500) at the one or more breaking points (400) when the part (500a) of the PCB (500), on which the NFC antenna (200) is arranged, or the connection portion is broken away from the PCB (500).

11. The system (200) according to claim 10, wherein
- the element (32) of the antenna arrangement (30) is a casing (32c) made of non-conductive material comprising one or more electrical contacts (35) that are electrically connected with the antenna (31) of the antenna arrangement (30),
- the casing (32a) is configured to be attached by at least one of friction fit, form fit and a magnet to a part (500b) of the PCB (500), at which the feeding line (300) is arranged, by at least partly accommodating the part (500b) of the PCB (500), at which the feeding line (300) is arranged, when the part (500a) of the PCB (500), on which the NFC antenna (200) is arranged, or the connection portion is broken away from the PCB (500), and
- the one or more electrical contacts (35) are configured to be electrically connected with the feeding line (300) when the casing (32) at least partly accommodates the part (500b) of the PCB (500), at which the feeding line (300) is arranged.

12. The system (100) according to claim 10, wherein
- the element (32) of the antenna arrangement (30) is a substrate (32c) made of non-conductive material comprising one or more electrical contacts (35) that are electrically connected with the antenna (31) of the antenna arrangement (30,
- the substrate (32c) is configured to be attached by at least one of friction fit, form fit and a magnet to a part (500b) of the PCB (500), at which the feeding line (300) is arranged, by at least partly arranging the substrate (32c) on the part (500b) of the PCB (500), at which the feeding line (300) is arranged, when the part (500a) of the PCB (500), on which the NFC antenna (200) is arranged, or the connection portion is broken away from the PCB (500), and
- the one or more electrical contacts (35) are configured to be electrically connected with the feeding line (300) when the substrate (32c) is at least partly arranged on the part (500b) of the PCB (500), at which the feeding line (300) is arranged.

13. A luminaire comprising
- a housing, and
- a system (10, 100) according to any one of the previous claims, wherein
- the system (10, 100) is arranged inside the housing.

14. The luminaire according to claim 13, wherein
- the antenna (31) of the antenna arrangement (30) is arranged on a surface of the housing.
